# EUROPÄISCHE PATENTSCHRIFT

(11) **EP 3 636 121 B1**
(45) Veröffentlichungstag und Bekanntmachung des Hinweises auf die Patenterteilung: **09.11.2022**
(21) Anmeldenummer: 19198666.0
(22) Anmeldetag: 20.09.2019
(51) Int. Cl.: A47J 43/07

(54) **KÜCHENGERÄT MIT EINHEITENUMRECHNUNG**
KITCHEN APPLIANCE WITH UNIT CONVERSION
APPAREIL DE CUISINE AVEC CONVERSION D'UNITÉ

(30) Priorität: 11.10.2018 DE 102018217415
(43) Veröffentlichungstag der Anmeldung: 15.04.2020
(73) Patentinhaber: BSH Hausgeräte GmbH, 81739 München (DE)
(72) Erfinder: Brunner, Andreas, 83301 Traunreut (DE); Krüger, Tobias, 80639 München (DE); Straub, Martina, 85570 Markt Schwaben (DE)

(56) Entgegenhaltungen:
- EP-A1- 2 901 903
- WO-A1-91/07862
- GB-A- 2 435 411
- US-A- 4 840 239

## Beschreibung

Die Erfindung betrifft ein Küchengerät, das einen Nutzer bei der Herstellung eines durch ein Rezept beschriebenes Nahrungsmittel unterstützt.

Ein Küchengerät, insbesondere ein Multifunktionsgerät, kann dazu verwendet werden, in einem Behälter Nahrungsmittel zu verarbeiten, z.B. zu raspeln, zu kneten, zu zerkleinern, zu vermischen und/oder zu garen. Ein Küchengerät kann zumindest einen Motor aufweisen, mit dem ein Verarbeitungsaufsatz (z.B. ein Messer oder ein Knethaken) angetrieben wird. Des Weiteren kann ein Küchengerät zumindest ein Bedienelement auf, mit dem der Motor aktiviert bzw. deaktiviert werden kann. Ggf. kann über das Bedienelement auch eine Betriebsstufe des Motors eingestellt werden. Außerdem kann das Küchengerät eine Waage bzw. ein Wiegeelement umfassen, die bzw. das es einem Nutzer des Küchengeräts ermöglicht, Zutaten, die in den Behälter des Küchengeräts gegeben werden, zu wiegen. WO 91/07862 A1 beschreibt ein Küchengerät mit einer Wiegeeinheit. GB 2 435 411 A1 beschreibt eine Küchenmaschine. US 4 840 239 A beschreibt eine Küchenwaage

Das vorliegende Dokument befasst sich mit der technischen Aufgabe, den Komfort eines Nutzers eines Küchengeräts, insbesondere einer Küchenmaschine, etwa eines Kochprozessors, bei der Herstellung eines Nahrungsmittels unter Verwendung eines Rezeptes in kosteneffizienter Weise zu erhöhen.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Küchengerät, insbesondere eine Küchenmaschine (ggf. mit Garfunktion), beschrieben. Das Küchengerät kann ausgebildet sein, auf eine Arbeitsplatte einer Küche gestellt zu werden. Des Weiteren kann das Küchengerät ausgebildet sein, einen Nutzer bei der Herstellung eines Nahrungsmittels aus ein oder mehreren Zutaten zu unterstützen. Zu diesem Zweck kann das Küchengerät ein oder mehrere Verarbeitungskomponenten zur Verarbeitung der ein oder mehreren Zutaten in einem Behälter des Küchengeräts umfassen. Die ein oder mehreren

Verarbeitungskomponenten können insbesondere eine Temperierungseinheit umfassen, die eingerichtet ist, den Behälter zu temperieren, insbesondere zu erwärmen (z.B. um ein Nahrungsmittel in dem Behälter zu garen).

Das Küchengerät umfasst einen Behälter (z.B. einen Topf) zur Aufnahme von ein oder mehreren Zutaten für ein Nahrungsmittel. Der Behälter kann z.B. ein Aufnahmevolumen zwischen 1 und 5 Litern aufweisen. Der Behälter kann aus einem Kunststoff oder aus einem Metall gefertigt sein.

Des Weiteren umfasst das Küchengerät eine Benutzerschnittstelle, mit zumindest einem Bedienelement (z.B. einer Taste) und zumindest einem Ausgabeelement (z.B. einem Bildschirm). Die Benutzerschnittstelle kann es einem Nutzer ermöglichen, eine Nutzereingabe an dem Küchengerät zu tätigen (z.B. um das Küchengerät zu steuern). Des Weiteren kann über die Benutzerschnittstelle eine Rückmeldung bzw. Ausgabe an einen Nutzer erfolgen.

Außerdem umfasst das Küchengerät ein Wiegeelement, das eingerichtet ist, Gewichtsdaten in Bezug auf den Behälter, insbesondere in Bezug auf ein oder mehrere Zutaten in dem Behälter, zu erfassen. Das Wiegeelement kann z.B. ein piezoelektrisches Element und/oder einen Dehnmessstreifen umfassen. Die Gewichtsdaten können das Gewicht des Behälters inklusive der in dem Behälter enthaltenen ein oder mehreren Zutaten anzeigen. Ggf. können die Gewichtsdaten nur das Nettogewicht der in dem Behälter enthaltenen ein oder mehreren Zutaten anzeigen (ohne dem Taragewicht des Behälters).

Ferner umfasst das Küchengerät eine Steuereinheit, die eingerichtet ist, Dichteinformation in Bezug auf eine Dichte einer bestimmten Zutat in dem Behälter zu ermitteln. Dabei kann die Dichteinformation einen Zutaten-spezifischen Umrechnungsfaktor zwischen einem Gewicht der Zutat (z.B. in Gramm) und einem Volumen der Zutat (z.B. in Liter) umfassen.

Die Steuereinheit ist eingerichtet, Gewichtsdaten bezüglich (des Gewichts) der bestimmten Zutat in dem Behälter zu ermitteln (mittels des Wiegeelements). Auf Basis der Gewichtsdaten und auf Basis der Dichteinformation werden Volumendaten in Bezug auf das Volumen der bestimmten Zutat in dem Behälter ermittelt und über die Benutzerschnittstelle, insbesondere über einen Bildschirm der Benutzerschnittstelle, ausgegeben.

Ein Rezept zur Herstellung eines Nahrungsmittels aus ein oder mehreren Zutaten weist insbesondere für eine flüssige Zutat typischerweise eine Volumenangabe in Bezug auf die erforderliche Menge der flüssigen Zutat auf. Das in diesem Dokument beschriebene Küchengerät unterstützt einen Nutzer bei der Umsetzung von derartigen Rezepten, da durch die Ermittlung und Ausgabe von Volumendaten die Menge einer in den Behälter gegebenen flüssigen Zutat in komfortabler und zuverlässiger Weise überprüft werden kann.

Die Steuereinheit kann eingerichtet sein, eine Nutzereingabe über die Benutzerschnittstelle zu erfassen (z.B. in Reaktion auf eine Aufforderung zur Tätigung einer Nutzereingabe). Die Nutzereingabe kann einen Identifikator, insbesondere eine Bezeichnung (z.B. Milch, Wasser, Öl, etc.), für die bestimmte Zutat (für die die Volumendaten ermittelt werden sollen) umfassen. Die Dichteinformation kann dann auf Basis der Nutzereingabe ermittelt werden. Insbesondere kann die Steuereinheit eingerichtet sein, die Dichteinformation auf Basis des Identifikators für die bestimmte Zutat in dem Behälter zu ermitteln. Zu diesem Zweck kann ein Zugriff auf eine Geräte-interne und/oder auf eine Geräte-externe Datenbank erfolgen, wobei die Datenbank für eine Vielzahl von unterschiedlichen Zutaten die jeweilige Dichteinformation anzeigt. So kann die Dichteinformation in effizienter und präziser Weise ermittelt werden.

Alternativ oder ergänzend kann die Steuereinheit eingerichtet sein, Rezeptdaten in Bezug auf ein unter Verwendung des Küchengeräts herzustellendes Nahrungsmittel zu ermitteln (z.B. aus einer Geräte-internen und/oder aus einer Geräte-externen Rezept-Datenbank). Die Rezeptdaten können die Zutaten für das Nahrungsmittel und Mengenangaben für die Zutaten anzeigen. Die Steuereinheit kann eingerichtet sein, die Dichteinformation auf Basis der Rezeptdaten zu ermitteln. Beispielsweise können die Rezeptdaten die Dichteinformation (insbesondere einen Umrechnungsfaktor) explizit anzeigen. Alternativ kann die Dichtinformation über den Identifikator einer in dem Rezept genannten Zutat aus der o.g. Geräte-internen und/oder Geräte-externen Datenbank ermittelt werden.

Erfindungsgemäß umfasst das Küchengerät eine Leseeinheit (z.B. einen Code-Reader oder einen RFID-Leser) , die eingerichtet ist, Information aus einem an der Verpackung der bestimmten Zutat angeordneten Informationselement auszulesen. Das Informationselement kann z.B. einen Code, einen Barcode, einen QR-Code und/oder einen RFID Chip umfassen. Beispielsweise kann es die Leseeinheit einem Nutzer ermöglichen, die Verpackung einer verwendeten Zutat vor die Leseeinheit zu halten, um dem Küchengerät mitzuteilen, welche Zutat in den Behälter gefüllt wurde oder wird. Die Steuereinheit ist ferner eingerichtet, die Dichteinformation auf Basis der über die Leseeinheit erfasste Information aus einem Informationselement zu ermitteln. So kann die Dichtinformation, insbesondere für komplexe Zutaten, in präziser Weise ermittelt werden.

Die Steuereinheit kann eingerichtet sein, eine Maßeinheit aus einer Mehrzahl von unterschiedlichen Maßeinheiten zu ermitteln, in der das Volumen der bestimmten Zutat ausgegeben werden soll. Beispielhafte Maßeinheiten sind: (milli oder dezi) Liter, Volumenunze, Gallone, etc. Die Volumendaten können dann in Abhängigkeit von der ermittelten Maßeinheit ermittelt werden. So kann der Komfort für einen Nutzer des Küchengeräts weiter erhöht werden.

Es ist zu beachten, dass jegliche Aspekte des in diesem Dokument beschriebenen Küchengeräts in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1 ein beispielhaftes Küchengerät in einer Seitenansicht; und
Figur 2 ein beispielhaftes Ausgabeelement einer Benutzerschnittstelle eines Küchengeräts.

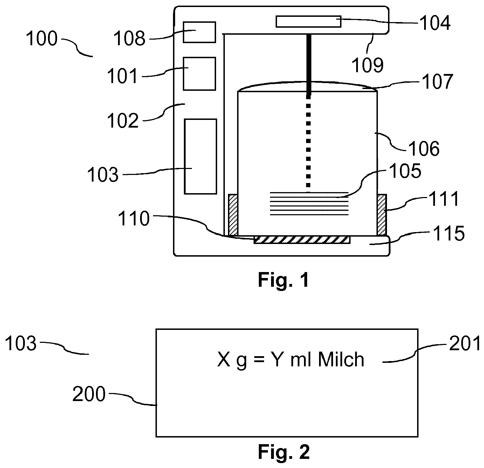

Wie eingangs dargelegt, befasst sich das vorliegende Dokument mit der Erhöhung des Komforts eines Nutzers bei der Herstellung eines Nahrungsgeräts unter Verwendung eines Küchengeräts. In diesem Zusammenhang zeigt Fig. 1 ein beispielhaftes Küchengerät 100, insbesondere eine beispielhafte Küchenmaschine. Das Küchengerät 100 umfasst ein Gehäuse 102, in bzw. an dem ein (typischerweise herausnehmbarer) Behälter 106 angeordnet ist, der ggf. mit einer (transparenten) Abdeckung 107 abgedeckt werden kann. In dem Behälter 106 können Nahrungsmittel verarbeitet werden, z.B. zerkleinert, geknetet und/oder gegart werden. Die Abdeckung 107 kann es einem Nutzer ermöglichen, den Fortschritt der Verarbeitung eines Nahrungsmittels in dem Behälter 106 zu beobachten. Des Weiteren kann die Abdeckung 107 als Spritzschutz dienen.

Das Küchengerät 100 kann ein oder mehrere Verarbeitungskomponenten 104, 105, 111 zur Verarbeitung eines (flüssigen und/oder festen) Nahrungsmittels umfassen. Beispielhafte Verarbeitungskomponenten 104, 105, 111 sind
- ein Aktor 104, insbesondere ein (elektrischer) Motor, zum Antrieb von ein oder mehreren unterschiedlichen Verarbeitungsaufsätzen 105 (z.B. einem Messer, einem Knethaken, einer Raspel, etc.); die Verarbeitungsaufsätze 105 können z.B. an einem Schwenkarm 109 des Küchengeräts 100 mit dem Aktor 104 gekoppelt werden bzw. gekoppelt sein; und/oder
- ein Temperierungselement 111 (z.B. ein Heiz- oder ein Kühlelement) zur Temperierung des Behälters 106.

Ein Küchengerät 100 kann somit eingerichtet sein, ein flüssiges, viskoses und/oder festes Nahrungsmittel zu mixen, zu zerkleinern, zu erwärmen, zu garen, zu kühlen, zu raspeln, zu kneten, zu mischen, etc. Das Küchengerät 100 kann auch ein Blender oder eine Küchenmaschine mit Garfunktion sein.

Das Küchengerät 100 umfasst ferner eine Benutzerschnittstelle 103 (z.B. mit ein oder mehreren Bedienelementen, wie z.B. Schalter bzw. Knöpfe, und/oder mit ein oder mehreren Ausgabeelementen, wie z.B. einem (ggf. berührungsempfindlichen) Bildschirm), mit der die Verarbeitungskomponenten 104, 105, 111 des Küchengeräts 100 durch einen Nutzer eingestellt werden können. Beispielsweise kann eine Rotationsgeschwindigkeit des Motors 104 und/oder eine Temperatur des Temperierungselements 111 eingestellt werden.

Das Küchengerät 100 umfasst typischerweise eine Steuereinheit 101, die eingerichtet ist, die ein oder mehreren Verarbeitungskomponenten 104, 105, 111 des Küchengeräts 100 in Abhängigkeit von einer Eingabe eines Nutzers an der Benutzerschnittstelle 103 zu steuern. Außerdem kann das Küchengerät 100 eine Kommunikationseinheit 108 (z.B. eine drahtlose Kommunikationsschnittstelle, etwa WLAN, oder eine USB Schnittstelle) umfassen, über die dem Küchengerät 100 Information bereitgestellt werden kann.

Das Küchengerät 100 umfasst ferner ein Wiegeelement 110, das z.B. an einer Basis 115 des Küchengeräts 100 angeordnet ist, und das eingerichtet ist, Gewichtsdaten in Bezug auf das Gewicht des Behälters 106 zu erfassen. Das Gewicht des Behälters 106 kann sich dabei aus dem Eigengewicht des Behälters 106 und dem Gewicht der in den Behälter 106 gefüllten ein oder mehreren Zutaten zusammensetzen. Die Steuereinheit 101 kann eingerichtet sein, auf Basis der von dem Wiegeelement 110 bereitgestellten Gewichtsdaten und unter Berücksichtigung des (typischerweise bekannten) Eigengewichts des Behälters 106 (als Taragewicht) das Nettogewicht der in dem Behälter 106 befindlichen ein oder mehreren Zutaten zu ermitteln. Des Weiteren kann die Steuereinheit 101 eingerichtet sein, Information in Bezug auf das Nettogewicht über die Benutzerschnittstelle 103 auszugeben.

Ein Nutzer kann das Küchengerät 100 dazu nutzen, ein in einem Rezept (z.B. einem Rezept aus einem Kochbuch oder von einer Rezept-Internetseite) beschriebenes Nahrungsmittel herzustellen. In dem Rezept werden die erforderlichen Zutaten sowie Mengeninformation zu den erforderlichen Mengen der unterschiedlichen Zutaten angegeben. Insbesondere kann ein Rezept für eine bestimmte Zutat die erforderliche Menge in Form einer Gewichtsangabe anzeigen. Der Nutzer kann dann das von dem Küchengerät 100 ausgegebene, insbesondere das angezeigte, Anfangsgewicht vor Zugabe der bestimmten Zutat in den Behälter 106 betrachten. Ferner kann der Nutzer während der Zugabe der bestimmten Zutat anhand des jeweils ausgegebenen (Netto-) Gewichts die Zugabe der bestimmten Zutat in den Behälter 106 präzise dosieren. Insbesondere kann so lange die bestimmte Zutat zugegeben werden, bis die Differenz des ausgegebenen Gewichts und dem Anfangsgewicht der Gewichtsangabe in dem Rezept entspricht. So kann ein Nutzer bei der Herstellung eines Nahrungsmittels gemäß einem Rezept unterstützt werden. Insbesondere kann so auf die Verwendung einer separaten Waage (zusätzlich zu dem Küchengerät 100) verzichtet werden.

Ein Rezept enthält insbesondere für flüssige Zutaten typischerweise Volumenangaben (z.B. unter Verwendung der Maßeinheit "Liter" oder "Flüssigunze" (z.B. die Imperiale oder die US Flüssigunze) oder "Gallone"). Das Küchengerät 100 kann eingerichtet sein, auf Basis der von dem Wiegeelement 110 bereitgestellten Gewichtsdaten und auf Basis eines Umrechnungsfaktors das Volumen einer bestimmten Zutat zu ermitteln, die dem Behälter 106 zugeführt wurde. Des Weiteren kann dem Nutzer über die Benutzerschnittstelle 103 Volumeninformation in Bezug auf das dem Behälter 106 zugeführte Volumen der bestimmten Zutat ausgegeben werden. So kann ein Nutzer bei der Herstellung eines Nahrungsmittels gemäß einem Rezept, das Volumenangaben umfasst, unterstützt werden. Insbesondere kann so auf die Verwendung eines separaten Messbechers (zusätzlich zu dem Küchengerät 100) verzichtet werden.

Beim Aufrufen bzw. Aktivieren der Wiegefunktion des Küchengeräts 100 kann der Nutzer über die Benutzerschnittstelle 103 angefragt werden, in welcher Einheit die Menge einer Zutat ausgegeben werden soll. Des Weiteren kann über die Benutzerschnittstelle 103 abgefragt werden, welche Zutat (z.B. Wasser, Milch, Öl, etc.) in den Behälter 106 gegeben werden soll. Die Steuereinheit 101 des Küchengeräts 100 kann dann den für die jeweilige Zutat anzuwendenden Umrechnungsfaktor zwischen Gewicht und Volumen ermitteln. Der Umrechnungsfaktor hängt dabei von der Dichte der jeweiligen Zutat und/oder von der auszugebenden Maßeinheit für das Volumen ab. Der Umrechnungsfaktor kann z.B. aus einer auf einer Speichereinheit des Küchengeräts 100 hinterlegten Liste bzw. Datenbank von Umrechnungsfaktoren für unterschiedliche Zutaten ermittelt werden. Alternativ oder ergänzend kann der Umrechnungsfaktor über die Kommunikationseinheit 108 des Küchengeräts 100 (z.B. aus einer Geräte-externen Datenbank) ermittelt werden.

Während der Zugabe der Zutat können durch das Wiegeelement 110 Gewichtsdaten in Bezug auf das Gewicht der zugegebenen Zutat erfasst werden. Die Gewichtsdaten können über den Umrechnungsfaktor in Volumendaten umgerechnet werden, die das Volumen der zugegebenen Zutat anzeigen. Die Volumendaten können dann über die Benutzerschnittstelle 103 ausgegeben werden. Fig. 2 zeigt eine beispielhafte bildliche Ausgabe 201 der Volumendaten auf einem Bildschirm 200 der Benutzerschnittstelle 103.

Die Steuereinheit 101 des Küchengeräts 100, insbesondere der Küchenmaschine mit Garfunktion, kann eingerichtet sein, über die Benutzerschnittstelle 103 Rezeptdaten in Bezug auf ein Rezept auszugeben. Dabei können dem Nutzer sequentiell Anweisungen für den jeweils auszuführenden Bearbeitungsschritt ausgegeben werden. Das in dem Küchengerät 100 gespeicherte Rezept kann Information darüber umfassen, welche Maßeinheit und ggf. welcher Umrechnungsfaktor zwischen der über das Wiegeelement 110 gemessenen Masse und dem im Rezept angezeigten Volumen zu verwenden ist. So kann der Umrechnungsfaktor in automatischer Weise ermittelt werden.

Das Küchengerät 100 umfasst eine Leseeinheit 112, z.B. einen Barcode-Reader oder einen QR-Code-Reader oder einen RFID Leser, die eingerichtet ist, ein auf der Verpackung einer Zutat angeordnetes Informationselement (z.B. einen Barcode, einen QR-Code oder einen RFID-Chip) auszulesen. Beispielsweise kann es die Leseeinheit 112 einem Nutzer ermöglichen, einen auf die Verpackung einer Zutat gedruckten Code einzulesen. Die Steuereinheit 101 kann eingerichtet sein, den für diese Zutat zu verwendenden Umrechnungsfaktor auf Basis der eingelesenen Information zu ermitteln. Beispielsweise kann die eingelesene Information direkt den Umrechnungsfaktor anzeigen. Alternativ oder ergänzend kann die eingelesene Information ggf. auf eine Internetseite oder auf eine Datenbank hinweisen, über die der Umrechnungsfaktor ermittelt werden kann. So kann der Umrechnungsfaktor, insbesondere für komplexe Zutaten, in komfortabler und präziser Weise ermittelt werden.

Durch die in diesem Dokument beschriebenen Maßnahmen kann der Komfort eines Nutzers eines Küchengeräts 100 bei der Herstellung eines Nahrungsmittels erhöht werden. Insbesondere kann aufgrund der beschriebenen Maßnahmen auf die Verwendung eines separaten Messbechers zur Abmessung von flüssigen Zutaten verzichtet werden.

## Patentansprüche

1. Küchengerät (100), das umfasst,
- einen Behälter (106) zur Aufnahme von ein oder mehreren Zutaten für ein Nahrungsmittel;
- eine Benutzerschnittstelle (103);
- ein Wiegeelement (110), das eingerichtet ist, Gewichtsdaten in Bezug auf den Behälter (106) zu erfassen;
- eine Leseeinheit (112), die eingerichtet ist, Information aus einem an einer Verpackung einer Zutat angeordneten Informationselement auszulesen; und
- eine Steuereinheit (101), die eingerichtet ist,
- auf Basis der über die Leseeinheit (112) erfassten Information aus einem Informationselement der Verpackung einer bestimmten Zutat in dem Behälter (106), Dichteinformation in Bezug auf eine Dichte der bestimmten Zutat in dem Behälter (106) zu ermitteln;
- Gewichtsdaten bezüglich der bestimmten Zutat in dem Behälter (106) zu ermitteln;
- auf Basis der Gewichtsdaten und auf Basis der Dichteinformation, Volumendaten in Bezug auf ein Volumen der bestimmten Zutat in dem Behälter (106) zu ermitteln; und
- die Volumendaten über die Benutzerschnittstelle (103) auszugeben.

2. Küchengerät (100) gemäß Anspruch 1, wobei die Steuereinheit (101) eingerichtet ist,
- eine Nutzereingabe über die Benutzerschnittstelle (103) zu erfassen; und
- die Dichteinformation auf Basis der Nutzereingabe zu ermitteln.

3. Küchengerät (100) gemäß Anspruch 2, wobei
- die Nutzereingabe einen Identifikator, insbesondere eine Bezeichnung, für die bestimmte Zutat umfasst; und
- die Steuereinheit (101) eingerichtet ist, die Dichteinformation auf Basis des Identifikators zu ermitteln, insbesondere durch Zugriff auf eine Geräte-interne und/oder eine Geräte-externe Datenbank, die für eine Vielzahl von unterschiedlichen Zutaten die jeweilige Dichteinformation anzeigt.

4. Küchengerät (100) gemäß einem der vorhergehenden Ansprüche, wobei
- die Benutzerschnittstelle (103) einen Bildschirm (200) umfasst; und
- die Steuereinheit (101) eingerichtet ist, die Volumendaten über den Bildschirm (200) auszugeben.

5. Küchengerät (100) gemäß einem der vorhergehenden Ansprüche, wobei die Dichteinformation einen Zutaten-spezifischen Umrechnungsfaktor zwischen einem Gewicht und einem Volumen umfasst.

6. Küchengerät (100) gemäß einem der vorhergehenden Ansprüche, wobei
- das Informationselement einen Code, einen Barcode, einen QR-Code und/oder einen RFID Chip umfasst.

7. Küchengerät (100) gemäß einem der vorhergehenden Ansprüche, wobei
- die Steuereinheit (101) eingerichtet ist, Rezeptdaten in Bezug auf ein unter Verwendung des Küchengeräts (100) herzustellendes Nahrungsmittel zu ermitteln;
- die Rezeptdaten Zutaten für das Nahrungsmittel und Mengenangaben für die Zutaten anzeigen; und
- die Steuereinheit (101) eingerichtet ist, die Dichteinformation auf Basis der Rezeptdaten zu ermitteln.

8. Küchengerät (100) gemäß einem der vorhergehenden Ansprüche, wobei
- das Küchengerät (100) ein oder mehrere Verarbeitungskomponenten (104, 105, 111) zur Verarbeitung der ein oder mehrere Zutaten in dem Behälter (106) umfasst; und
- die ein oder mehreren Verarbeitungskomponenten (104, 105, 111) insbesondere eine Temperierungseinheit (111) umfassen, die eingerichtet ist, den Behälter (106) zu temperieren, insbesondere zu erwärmen.

9. Küchengerät (100) gemäß einem der vorhergehenden Ansprüche, wobei die Steuereinheit (101) eingerichtet ist,
- eine Maßeinheit aus einer Mehrzahl von unterschiedlichen Maßeinheiten zu ermitteln, in der das Volumen der bestimmten Zutat ausgegeben werden soll; und
- die Volumendaten in Abhängigkeit von der ermittelten Maßeinheit zu ermitteln.

10. Küchengerät (100) gemäß einem der vorhergehenden Ansprüche, wobei das Wiegeelement (110) ein piezoelektrisches Element und/oder einen Dehnmessstreifen umfasst.

## Claims

1. Kitchen appliance (100), which comprises,
- a container (106) for receiving one or more ingredients for a foodstuff;
- a user interface (103);
- a weighing element (110) which is designed to detect weight data in respect of the container (106);
- a read unit (112) which is designed to read out information from an information element arranged on a packaging of an ingredient; and
- a control unit (101), which is designed
- to determine density information in respect of a density of the specific ingredient in the container (106) on the basis of the information, detected by way of the read unit (112), from an information element on the packaging of a specific ingredient in the container (106);
- to determine weight data relating to the specific ingredient in the container (106);
- to determine volume data in respect of a volume of the specific ingredient in the container (106) on the basis of the weight data and on the basis of the density information; and
- to output volume data by way of the user interface (103).

2. Kitchen appliance (100) according to claim 1, wherein the control unit (101) is designed
- to detect a user input by way of the user interface (103); and
- to determine density information on the basis of the user input.

3. Kitchen appliance (100) according to claim 2, wherein
- the user input comprises an identifier, in particular a label, for the specific ingredient; and
- the control unit (101) is designed to determine density information on the basis of the identifier, in particular by accessing an appliance-internal and/or an appliance-external database, which indicate the respective density information for a plurality of different ingredients.

4. Kitchen appliance (100) according to one of the preceding claims, wherein
- the user interface (103) comprises a monitor (200); and
- the control unit (101) is designed to output the volume data by way of the monitor (200).

5. Kitchen appliance (100) according to one of the preceding claims, wherein the density information comprises an ingredient-specific conversion factor between a weight and a volume.

6. Kitchen appliance (100) according to one of the preceding claims, wherein
- the information element comprises a code, a barcode, a QR code and/or an RFID chip.

7. Kitchen appliance (100) according to one of the preceding claims, wherein
- the control unit (101) is designed to determine recipe data in respect of a foodstuff to be produced using the kitchen appliance (100);
- the recipe data indicates ingredients for the foodstuff and quantities for the ingredients; and
- the control unit (101) is designed to determine the density information on the basis of the recipe data.

8. Kitchen appliance (100) according to one of the preceding claims, wherein
- the kitchen appliance (100) comprises one or more processing components (104, 105, 111) for processing the one or more ingredients in the container (106); and
- the one or more processing components (104, 105, 111) comprise in particular a temperature control unit (111), which is designed to control the temperature of, in particular to heat up, the container (106).

9. Kitchen appliance (100) according to one of the preceding claims, wherein the control unit (101) is designed,
- to determine a measuring unit from a plurality of different measuring units, in which the volume of the specific ingredient is to be output; and
- to determine the volume data as a function of the determined measuring unit.

10. Kitchen appliance (100) according to one of the preceding claims, wherein the weighing element (110) comprises a piezoelectric element and/or a strain gauge.

## Revendications

1. Appareil de cuisine (100), qui comprend :
- un récipient (106) qui destiné à la réception d'un ou de plusieurs ingrédients pour une denrée alimentaire ;
- une interface utilisateur (103) ;
- un élément de pesée (110) qui est conçu pour enregistrer des données de poids par rapport au récipient (106) ;
- une unité de lecture (112) qui est conçue pour extraire des informations par lecture à partir d'un élément d'information qui est disposé contre un conditionnement d'un ingrédient ; et
- une unité de commande (101) qui est conçue :
- sur la base des informations qui ont été enregistrées par l'intermédiaire de l'unité de lecture (112) à partir d'un élément d'information du conditionnement d'un ingrédient déterminé dans le récipient (106), pour identifier des informations qui concernent la masse volumique par rapport à une masse volumique de l'ingrédient déterminé dans le récipient (106) ;
- pour identifier des données de poids par rapport à l'ingrédient déterminé dans le récipient (106) ;
- sur la base des données de poids et sur la base des informations qui concernent la masse volumique, pour identifier des données de volume par rapport à un volume de l'ingrédient déterminé dans le récipient (106) ; et
- pour fournir les données de volume par l'intermédiaire de l'interface utilisateur (103).

2. Appareil de cuisine (100) conformément à la revendication 1, dans lequel l'unité de commande (101) est conçue :
- pour enregistrer une entrée utilisateur par l'intermédiaire de l'interface utilisateur (103) ; et
- pour identifier les informations qui concernent la masse volumique sur la base de l'entrée utilisateur.

3. Appareil de cuisine (100) conformément à la revendication 2, dans lequel :
- l'entrée utilisateur comprend un identificateur, en particulier une dénomination, pour l'ingrédient déterminé ; et
- l'unité de commande (101) est conçue pour identifier, sur la base de l'identificateur, les informations qui concernent la masse volumique, en particulier en accédant à une banque de données interne à l'appareil et/ou à une banque de données externe à l'appareil, qui affiche(nt) les informations respectives qui concernent la masse volumique pour une multitude d'ingrédients différents.

4. Appareil de cuisine (100) conformément à l'une quelconque des revendications précédentes, dans lequel :
- l'interface utilisateur (103) comprend un écran (200) ; et
- l'unité de commande (101) est conçue pour fournir les données de volume par l'intermédiaire de l'écran (200).

5. Appareil de cuisine (100) conformément à l'une quelconque des revendications précédentes, dans lequel les informations qui concernent la masse volumique comprennent un facteur de conversion entre en poids et un volume, qui est spécifique pour l'ingrédient.

6. Appareil de cuisine (100) conformément à l'une quelconque des revendications précédentes, dans lequel :
- l'élément d'information comprend un code, un code-barres, un code QR et/ou une puce RFID.

7. Appareil de cuisine (100) conformément à l'une quelconque des revendications précédentes, dans lequel :
- l'unité de commande (101) est conçue pour identifier des données de recette par rapport à une denrée alimentaire qui doit être préparée en faisant appel à l'appareil de cuisine (100) ;
- les données de recette indiquent des ingrédients pour la denrée alimentaire et des données de quantités pour les ingrédients ; et
- l'unité de commande (101) est conçue pour identifier les informations qui concernent la masse volumique, sur la base des données de recette.

8. Appareil de cuisine (100) conformément à l'une quelconque des revendications précédentes, dans lequel :
- l'appareil de cuisine (100) comprend un ou plusieurs composants de préparation (104, 105, 111) qui sont destinés à la préparation desdits un ou plusieurs ingrédients dans le récipient (106) ; et
- lesdits un ou plusieurs composants de préparation (104, 105, 111) comprennent en particulier une unité de réglage de la température (111) qui est conçue pour régler la température du récipient, en particulier pour chauffer le récipient (106).

9. Appareil de cuisine (100) conformément à l'une quelconque des revendications précédentes, dans lequel l'unité de commande (101) est conçue :
- pour identifier une unité de mesure, à partir d'une multitude d'unités de mesure différentes, dans laquelle le volume de l'ingrédient déterminé doit être fourni ; et
- pour identifier les données de volume en fonction de l'unité de mesure qui a été identifiée.

10. Appareil de cuisine (100) conformément à l'une quelconque des revendications précédentes, dans lequel l'élément de pesée (110) comprend un élément piézoélectrique et/ou une jauge de contrainte.
